(19) Europäisches Patentamt

European Patent Office

Office européen des brevets

(11) **EP 3 892 079 B1**

(12) **FASCICULE DE BREVET EUROPEEN**

(45) Date de publication et mention
de la délivrance du brevet:
**28.02.2024 Bulletin 2024/09**

(21) Numéro de dépôt: **21167920.4**

(22) Date de dépôt: **12.04.2021**

(51) Classification Internationale des Brevets (IPC):
**A01C 17/00** (2006.01)    **A01C 21/00** (2006.01)

(52) Classification Coopérative des Brevets (CPC):
**A01C 17/001; A01C 17/008; A01C 21/00**

(54) **PROCÉDÉ DE RÉGLAGE D'UN ÉPANDEUR CENTRIFUGE DE PARTICULES ET ÉPANDEUR CENTRIFUGE DE PARTICULES**

VERFAHREN ZUR EINSTELLUNG EINES SCHLEUDERSTREUERS UND ENTSPRECHENDER SCHLEUDERSTREUER

METHOD FOR ADJUSTING A CENTRIFUGAL PARTICLE SPREADER AND CENTRIFUGAL PARTICLE SPREADER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2020 FR 2003622**

(43) Date de publication de la demande:
**13.10.2021 Bulletin 2021/41**

(73) Titulaires:
• **Institut national de recherche pour l'agriculture, l'alimentation et l'environnement**
**75007 Paris (FR)**
• **Institut National Superieur des Sciences Agronomiques de l'Alimentation et de l'Environnement**
**21079 Dijon Cedex (FR)**

(72) Inventeurs:
• **PIRON, Emmanuel**
**03300 Creuzier le Vieux (FR)**
• **LE, Tien-Thinh**
**03150 Varennes sur Allier (FR)**
• **MICLET, Denis**
**03150 Varennes sur Allier (FR)**
• **VILLETTE, Sylvain**
**21000 Dijon (FR)**

(74) Mandataire: **Ipside**
**6, Impasse Michel Labrousse**
**31100 Toulouse (FR)**

(56) Documents cités:
**EP-A1- 0 472 855    EP-A1- 2 556 738**
**EP-A1- 2 868 183    EP-A1- 3 305 056**

## Description

### Domaine technique de l'invention

La présente invention se rapporte au domaine des techniques d'épandage de particules, dans le domaine de l'agriculture, ou de produits se présentant sous la forme de grains, tels que des engrais.

Plus particulièrement, la présente invention concerne un procédé de réglage d'un épandeur centrifuge de particules et un épandeur centrifuge de particules.

### Technique antérieure

Il est connu d'utiliser des épandeurs centrifuges pour l'épandage de particules.

Dans le domaine de l'agriculture par exemple, la largeur de travail cible dépend des activités culturales réalisées avant épandage.

On règle l'épandeur pour s'adapter à la parcelle, comme par exemple le fait de respecter une largeur de travail donnée. En l'absence de ces réglages, des défauts apparaissent, par exemple des sur- et des sous-dosages en bandes le long de la trajectoire suivie par l'épandeur.

Ils mettent en oeuvre un ou plusieurs disques mobiles en rotation, et équipés de pales. Le produit à épandre peut notamment être stocké dans une trémie, et amené ou déversé au-dessus de chaque disque par un organe de transfert, par exemple par une goulotte mobile au-dessus du disque ou via une ou plusieurs ouvertures pouvant être partiellement obturées par une trappe, de façon à être projeté par l'intermédiaire des pales sur le terrain sur lequel il doit être déposé.

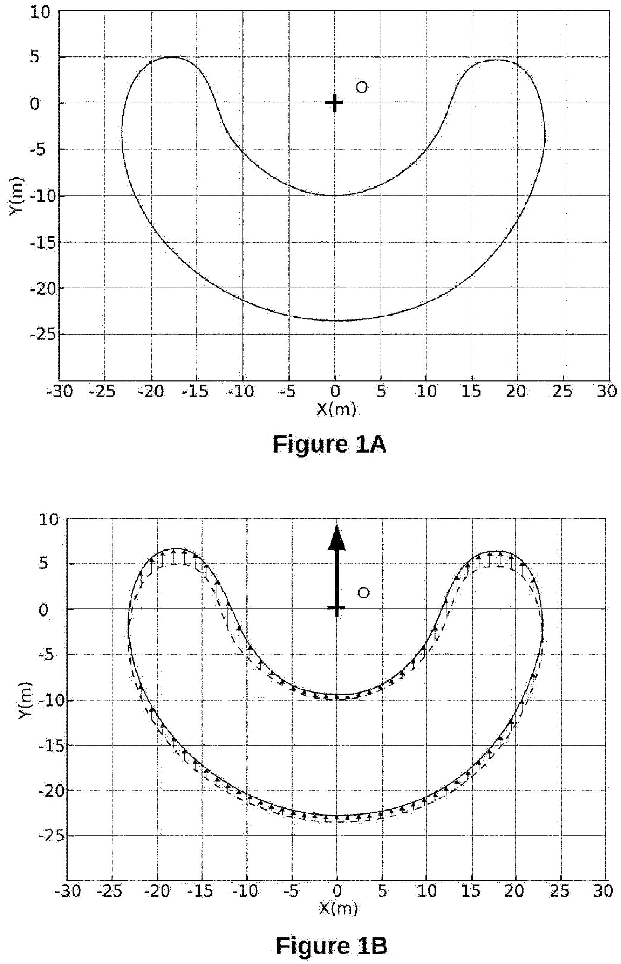

La nappe au sol définie par les produits distribués lors de l'épandage est de forme globalement semi-annulaire, ou en forme de croissant (en référence au croissant de viennoiserie), la largeur au milieu de la nappe étant plus importante que la largeur au niveau de chacune des pointes, comme illustré sur la figure 1A.

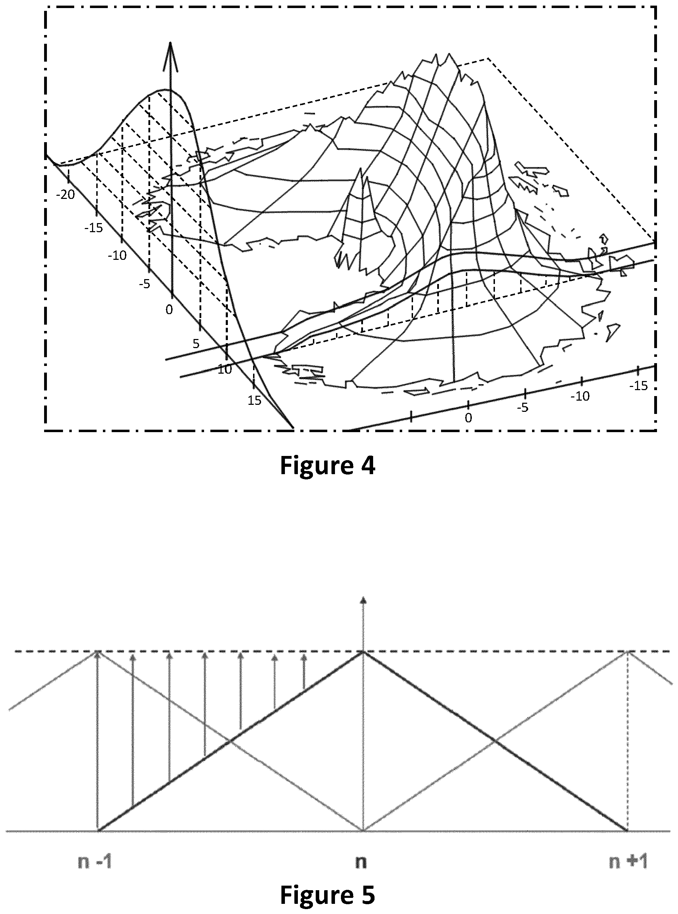

Sur cette figure, l'emplacement de l'épandeur centrifuge, par exemple porté par un véhicule comme un tracteur, est symbolisé par une croix placée au point origine O d'un plan (X, Y) représentant le sol. La nappe représentée est le résultat du processus complet de répartition, c'est-à-dire qu'elle est une empreinte de la répartition de produit lorsque l'épandeur centrifuge est en fonctionnement. Il convient de noter que la densité de produit distribuée n'est pas la même en tout point de la nappe, voir ci-après la figure 4.

La détermination de la nappe d'épandage peut se faire de deux manières :

- par simulation numérique ;
- par mesure sur banc d'essai.

Dans les deux cas, le processus d'obtention de la nappe s'opère en considérant un épandeur en position arrêtée, par exemple pour les bancs rotatifs de type Cemib (marque déposée) ou à faible vitesse (par exemple pour les bancs transversaux, pour lesquels la vitesse est de l'ordre de 4 à 8 km.

Depuis longtemps, il est connu d'apporter des corrections pour tenir compte de ce qui est couramment appelé l'effet débit. L'homme du métier a en effet constaté que, en fonction du débit, la nappe au sol et la répartition transversale résultante varient, par rapport à une nappe au sol cible et à une répartition cible.

Pour obtenir une dose cible, c'est-à-dire une quantité de particules souhaitée par unité de surface au sol, il convient bien entendu de déposer une quantité identifiée de particules sur le disque à chaque instant, ou par unité de temps prédéterminée. Et on comprend que cette quantité doit varier non seulement en fonction de la dose cible, de la largeur de travail cible, mais également de la vitesse de déplacement de l'épandeur. En d'autres termes, on détermine un débit cible de particules qui doivent être déposées sur le ou les disques d'épandage, fonction de la dose cible, d'une largeur de travail cible et de la vitesse.

L'homme du métier a constaté que le débit a un impact sur la distribution surfacique des particules. On comprend en effet que la distribution des particules varie sensiblement selon que l'on dépose à chaque instant sur le disque une faible quantité de particules ou une quantité plus importante.

Ce problème est identifié comme « l'effet débit » (parfois appelé également, par abus de langage, « effet dose »). Effectivement, un même débit, et donc une même correction associée, seront appliqués, par exemple pour une dose de 100kg/ha et une vitesse de 20 km/h ou pour une dose de 200kg/ha et une vitesse de 10 km/h. Or on constate que la forme de la nappe au sol et de la répartition transversale varie, en surface et en direction, en fonction de la quantité de particules délivrées par unité de temps sur le / les disque(s).

Cet effet débit nécessite donc une correction visant à maintenir la répartition transversale inchangée lorsque le débit est modifié. Cette correction prend en compte la quantité de particules par unité de temps délivrée.

Pour compenser l'effet débit, il est connu de mettre en oeuvre, par exemple, une forme de goulotte spécifique (exemple de publication de brevet n° EP2454928), des formes d'ouverture et de trappe particulières (exemple de publication de brevet n° EP1707042), ou un nombre de pales important sur chaque disque, par exemple huit pales par disque.

Actuellement, les systèmes de gestion des épandeurs centrifuges permettent de régler les épandeurs de manière à obtenir une largeur de travail donnée. Toutefois, comme indiqué précédemment, ces réglages sont déterminés sur banc d'essai grâce à des mesures réalisées à vitesse nulle ou quasi nulle, et ils ne prennent pas en compte ensuite l'effet de cette vitesse de déplacement sur la largeur de travail tel que décrit auparavant.

Il suffit, pour le constater, d'étudier les tables de réglages des épandeurs du marché et de constater que jamais les réglages des organes agissant sur l'adaptation aux largeurs de travail ne sont proposés comme une fonction de la vitesse.

De nombreux dispositifs de gestion des paramètres d'épandage sont connus, par exemple des systèmes de régulation du débit de produit fourni aux disques distributeurs, de type DPA (pour Débit Proportionnel à l'Avancement) ou DPAE (pour Débit Proportionnel à l'Avancement Electronique). Ces systèmes permettent d'ajuster le débit en fonction de la vitesse d'avancement du véhicule. Un exemple de cette approche est décrit dans le document de brevet EP0472855.

Un autre exemple connu est le document de brevet européen EP 2 200 420 qui décrit un épandeur centrifuge équipé d'un système GPS permettant d'ajuster le débit de produit en fonction de l'avancée de l'épandeur.

Les inventeurs ont cependant observé que cette correction de l'effet débit n'était pas suffisante dans toutes les situations, et que la nappe au sol variait sensiblement en fonction de la vitesse de déplacement de l'épandeur. La figure 1B illustre l'impact qualitatif de la vitesse de déplacement de l'épandeur centrifuge sur la nappe d'épandage. Sur cette figure, le déplacement de l'épandeur centrifuge (ou du véhicule sur lequel il est monté) est symbolisé par une flèche en trait épais d'origine le point origine O et dirigée dans le sens des ordonnées Y croissantes.

La nappe d'épandage classiquement prise en compte, formée par l'épandeur centrifuge à l'arrêt, comme illustré dans la figure 1A est représentée en traits interrompus.

La nappe d'épandage formée par l'épandeur centrifuge en déplacement, à une vitesse approximative de 20km/h, est représentée en trait plein. Bien entendu, dans ce cas, seule la nappe d'épandage imputable à l'épandeur centrifuge au point O est représentée.

Il apparaît que la vitesse de déplacement déforme la nappe produite au sol en particulier dans le sens de déplacement de l'épandeur centrifuge. Des flèches réparties tout le long du pourtour de la nappe d'épandage symbolisent la déformation de la nappe d'épandage lorsque l'on passe de la nappe formée par l'épandeur centrifuge sans vitesse de déplacement à celle formée avec vitesse. L'amplitude de la déformation est symbolisée par la longueur des flèches. Il apparaît que la déformation est plus importante sur les côtés de la nappe qu'au centre.

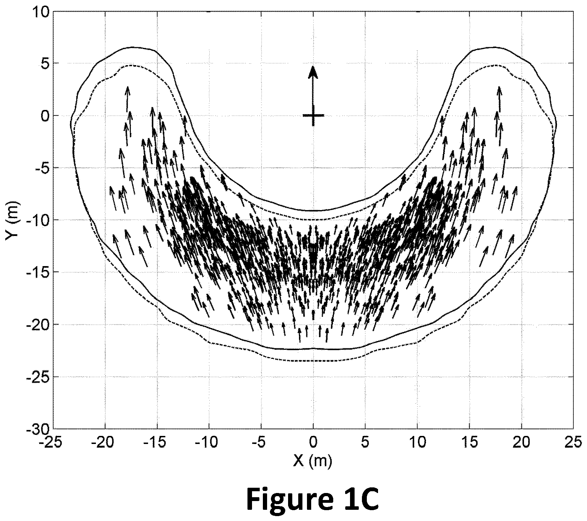

La figure 1C montre des flèches qui décrivent les déplacements des points d'atterrissage des particules au sol sous l'effet de la vitesse d'épandage. La figure 1C reprend, par ailleurs, les éléments du déplacement de la nappe représentés à la figure 1B.

De tels éléments de déformation se traduisent par des modifications de concentration de produit à l'intérieur de la nappe, et ont donc des impacts négatifs sur la régularité de la répartition transversale de produit lors de l'épandage.

Un autre exemple connu est le document de brevet européen EP 2868 183 qui décrit un épandeur centrifuge doté de moyens lui permettant l'optimisation des distributions d'engrais à l'intérieur d'une parcelle, en tenant compte des caractéristiques dimensionnelles de ladite parcelle, des trajectoires suivies dans cette parcelle, et des caractéristiques de la nappe d'épandage telles que la portée maximale de projection, les performances intrinsèques des engrais, ··· Ce document mentionne la prise en compte de la vitesse de l'épandeur pour, en corrélation avec les caractéristiques des engrais, prendre la bonne décision de moment d'ouverture, fermeture des trappes de débit, de modifications de réglages de largeur de travail, ··· dans les cas spécifiques et restreints d'adaptations aux zones de géométries spécifiques d'épandage non linéaires (tournières, fins et débuts de parcelles, ···). L'inconvénient majeur est la non prise en compte de l'information de vitesse en ce qu'elle impacte la qualité de la distribution transversale produite dans les configurations d'épandage plein champ, et particulièrement en faisant varier la largeur optimale de travail proportionnellement à la vitesse d'épandage.

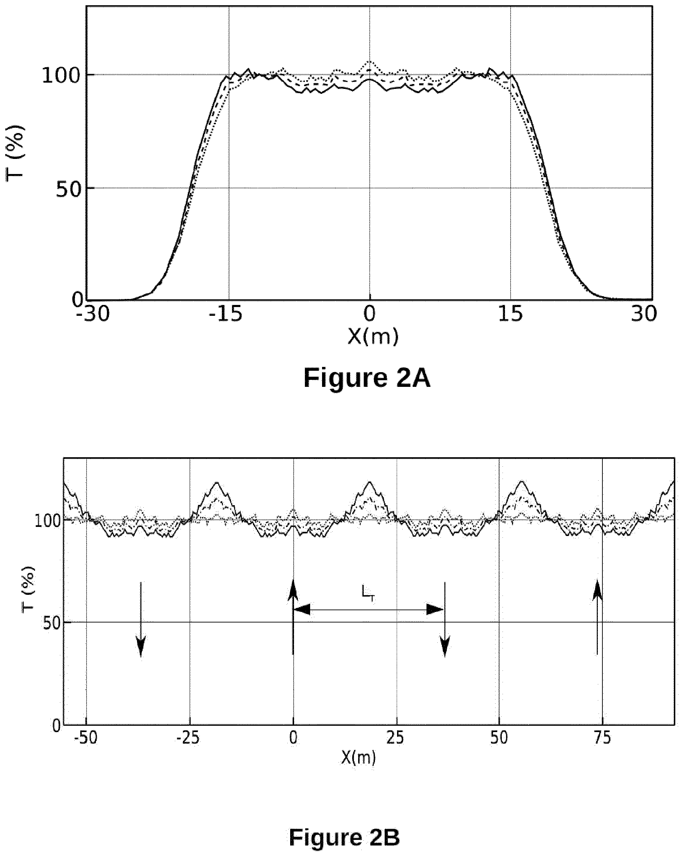

A titre illustratif, les figures 2A et 2B illustrent l'impact de la vitesse sur la répartition transversale de produit.

La figure 2A illustre les taux de produits distribués transversalement et de part et d'autre de l'épandeur centrifuge placé en une abscisse X nulle, relativement à une dose moyenne de produit à distribuer.

Le taux de produit en un point est défini ici comme le rapport entre la dose de produit en ce point et la dose moyenne calculée en tenant compte des recouvrements successifs occasionnés par les divers passages de l'épandeur au cours de l'épandage.

La courbe en traits pointillés représente la répartition transversale de produit lorsque le distributeur est à l'arrêt.

La courbe en traits interrompus représente la répartition transversale de produit lorsque le distributeur avance à 10 km/h.

La courbe en trait plein représente la répartition transversale de produit lorsque le distributeur avance à 20 km/h.

Ces courbes font apparaître les conséquences des variations de concentration à l'intérieur de la nappe mentionnées plus haut, en fonction de la vitesse d'avancement de l'épandeur.

La figure 2A représente la répartition de produit uniquement pour une évolution du distributeur selon un axe caractérisé par une abscisse X nulle. Dans le milieu agricole, le tracteur sur lequel est monté l'épandeur centrifuge est amené à faire plusieurs allers-retours sur le champ afin de balayer l'ensemble de la surface du champ à fertiliser.

La figure 2B représente le cumul de produit sur une coupe transversale de champ à l'issue d'une opération d'épandage comportant des passages successifs juxtaposés, c'est-à-dire décalés de la valeur d'une largeur de travail, symbolisés par des flèches, d'un épandeur centrifuge. La distance entre chaque passage définit une largeur de travail $L_T$.

Cette figure permet de comparer les répartitions de produit obtenues en absence de vitesse (courbe en traits pointillés), à une vitesse de déplacement de l'épandeur de 10 km/h (courbe en traits interrompus), ou à une vitesse de déplacement de l'épandeur de 20 km/h (courbe en trait plein).

Ces courbes montrent l'impact de la vitesse sur :

- d'une part, les zones de recouvrement de nappes adjacentes (inter-passages), au niveau desquelles le taux moyen de produit passe d'environ 100 % à 120 % ;
- d'autre part, les zones centrales de passage de l'épandeur pour lesquelles le taux moyen de produit passe d'environ 100 % à 90 %.

L'homogénéité de la répartition est classiquement quantifiée par un coefficient de variation CV, exprimé en pourcentage, et égal au rapport de l'écart-type de la répartition sur la moyenne. Plus ce coefficient de variation CV est faible, plus la répartition est homogène.

Classiquement, le calcul du coefficient de variation CV est réalisé pour toutes les largeurs de travail $L_T$ courantes en agriculture allant de 0 à 60m environ. La courbe de ces valeurs de CV successives est dénommée « courbe des CV ».

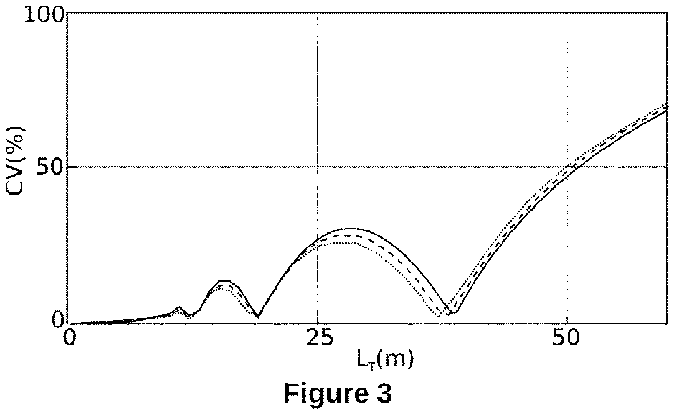

La Figure 3 illustre, dans les trois cas de vitesses de déplacement vus plus haut, c'est-à-dire vitesse nulle (courbe en pointillés), de 10 km/h (courbe en traits interrompus) ou de 20 km/h (courbe en trait plein), les courbes de CV associées.

Il apparaît sur la figure 3 que la vitesse de déplacement de l'épandeur a pour effet global de décaler la courbe du coefficient de variation vers la droite. Une largeur optimale de travail étant définie par un minimum local du coefficient de variation CV sur une plage possible de valeurs de largeur de travail $L_T$, il ressort donc que la vitesse de déplacement impacte la largeur optimale de travail, qui passe dans cet exemple de 37 m en absence de vitesse, à 38 m puis 39 m pour des vitesses respectivement de 10 et 20 km/h.

Cette augmentation de la largeur de travail optimale est liée au surdosage observé sur les parties latérales de la nappe d'épandage généré par la vitesse de déplacement de l'épandeur, lequel surdosage oblige à augmenter la largeur de travail en compensation afin d'obtenir une répartition plus homogène.

Il convient de noter que ces tendances se retrouvent pour toutes les formes de répartitions transversales, avec une sensibilité plus importante pour les répartitions transversales de forme triangulaire.

La vitesse de déplacement de l'épandeur centrifuge a donc un impact sur la régularité de la répartition transversale. Notamment, elle augmente la largeur de travail optimale, ce qui s'avère problématique dans la mesure où la largeur de travail cible est en général contrainte et dans la mesure où la largeur de travail n'est pas une fonction de la vitesse d'épandage.

Ces impacts, sur la nappe au sol et la répartition, de ce qui est appelé par la suite "l'effet vitesse", par analogie avec la terminologie "effet débit", sont relativement faibles, notamment par rapport à l'effet débit, et n'avaient jamais été observés, et en tout état de cause analysés. L'homme du métier n'en avait pas connaissance, et n'était pas incité à étudier cet aspect, puisque la vitesse de déplacement est déjà prise en compte dans la correction de l'effet débit (le débit étant défini comme le produit de la vitesse et d'une dose de référence appliquée sur une largeur de référence).

Un inconvénient de ces solutions est que les performances prises en compte sont celles relevées « à poste fixe » ou bien à vitesse très faible fixée. Ces solutions ne tiennent donc pas compte de l'impact de la vitesse de l'épandeur sur la distribution transversale lors de l'épandage, tel que décrit plus haut.

**Présentation de l'invention**

La présente invention vise à apporter une solution efficace au problème identifié par les inventeurs.

Plus précisément, l'invention a pour objectif, au moins selon certains modes de réalisation, de fournir une technique d'épandage centrifuge prenant en compte l'effet vitesse de façon simple et efficace.

En particulier, un objectif de l'invention est de fournir, selon au moins certains modes de réalisation, une telle technique permettant de s'affranchir de tout autre système de réglage complexe.

Un autre objectif de l'invention est, selon au moins certains modes de réalisation, de fournir une telle technique qui soit peu coûteuse à mettre en oeuvre et qui ne nécessite pas d'entretien particulier.

Selon un mode de réalisation particulier, un objectif de l'invention est de fournir une telle technique, qui puisse être adaptée aisément à des systèmes existants.

Ces objectifs, ainsi que d'autres qui apparaîtront par la suite, sont atteints, selon un premier aspect, à l'aide d'un procédé de réglage d'un épandeur centrifuge de particules, ledit épandeur mettant en oeuvre une première correction d'un effet, dit effet débit, d'une variation du débit d'alimentation en particules par rapport à un débit cible sur une nappe au sol couverte par lesdites particules et/ou sur une répartition transversale desdites particules, tenant compte d'une dose cible, d'une vitesse de déplacement dudit épandeur centrifuge et d'une largeur de travail cible.

Selon l'invention, ledit procédé comprend en outre une étape de détermination d'une correction d'un effet vitesse se traduisant par une déformation et/ou un déplacement d'une forme de nappe au sol et/ou de répartition transversale en fonction d'une vitesse de déplacement (V) et agissant sur au moins un organe d'actionnement permettant de modifier la forme de la nappe au sol et/ou de la répartition transversale,

dont l'étape de détermination de la correction d'un effet vitesse détermine ou modifie ou délivre un paramètre (P) appartenant au groupe comprenant :

- un paramètre modifiant un point d'alimentation des particules sur le disque ;
- un paramètre modifiant une inclinaison du ou desdits disques ;
- un paramètre modifiant un régime de rotation du ou desdits disques ;
- un paramètre modifiant une inclinaison de l'épandeur centrifuge ;

ladite correction d'un effet vitesse applique au point de dépose un décalage angulaire $\Delta\theta$ selon un angle centré sur un axe du disque concerné, s'écrivant de la manière suivante : $\Delta\theta = \sum_{i=0}^{N} k_i * V^i$ avec V la vitesse de déplacement, N est un entier supérieur ou égal à 1, et k_i un coefficient déterminé.

On entend ici, par point de dépose ou point d'alimentation, le point de chute ou d'alimentation des particules sur le disque.

La première correction de l'effet débit est importante et bien connue. Mais les inventeurs ont identifié qu'elle n'est pas suffisante, pour obtenir une correction la plus efficace possible. Ils ont en effet identifié que, pour un débit fixé, et une correction de l'effet débit associée, des variations de la nappe au sol et de la répartition réelle apparaissaient dans certaines situations.

Il est important de noter que la correction de l'effet débit est une correction principale, et que la correction de l'effet vitesse, proposée par les inventeurs, est une correction additionnelle secondaire, venant améliorer la correction principale.

Selon l'invention, on effectue donc deux corrections successives, tenant compte en pratique chacune de la vitesse, une fois pour l'effet débit (vitesse * dose * largeur) et une fois directement (par exemple via une fonction polynomiale, notamment une fonction affine). Les deux corrections ne doivent et ne peuvent pas être confondues : le débit pouvant être le même à différentes vitesses, en fonction de la dose, la correction de l'effet débit n'agit pas spécifiquement en fonction de la vitesse seule.

Cette observation, et l'analyse qui en a découlée, font en elles-mêmes parties de l'invention, qui constitue ainsi, au moins en partie, une invention de problème. En effet, ni ces variations, ni les raisons de ces variations n'avaient été identifiées et analysées.

Les inventeurs ont en effet déterminé que ces variations sont dues à la vitesse de l'épandeur. Ainsi, pour un débit donné, et malgré une correction de l'effet débit, la nappe au sol et la répartition transversale varient. En d'autres termes, pour un même débit global de l'épandeur de par exemple 3 kg/s, la nappe au sol réelle et la répartition transversale ne seront pas les mêmes, selon que la vitesse est 10 ou 20 km/h. C'est ce qu'ont identifié les inventeurs, et c'est pourquoi ils proposent la mise en oeuvre technique d'une correction additionnelle permettant de maintenir identiques la nappe au sol et la répartition transversale associée quelle que soit la vitesse réelle d'épandage. La première correction peut être effectuée par un réglage d'un paramètre d'un organe d'actionnement de l'épandeur et également par une goulotte adaptée, une forme de trappe particulière ou un grand nombre de pales.

La forme de la nappe d'épandage au sol et la répartition transversale à une vitesse donnée sont corrigées de manière à se rapprocher autant que faire se peut de la forme de la nappe au sol cible et de la forme de la répartition transversale cible, définies à l'arrêt ou à faible vitesse, en tenant compte des effets induits par une variation de la vitesse de déplacement.

On entend ici que la répartition transversale cible est obtenue après au moins deux passages successifs et latéralement décalés d'une valeur égale à la largeur de travail. Ainsi le plus souvent, et à titre illustratif, cette répartition transversale cible représente une droite horizontale positionnée à 100% sur l'axe des ordonnées des figures 2A et 2B.

Ainsi, on tient compte de deux informations, la vitesse réelle et la dose cible et, selon l'invention, la vitesse est prise en compte deux fois, avec des conséquences différentes :

EP 3 892 079 B1

- Une fois pour calculer un débit, et en conséquence une correction de l'effet débit
- Une fois en tant qu'information de vitesse spécifiquement, pour une correction nouvelle et non évidente de l'effet vitesse, mis en évidence par l'inventeur

L'invention est avantageusement mise en oeuvre selon les modes de réalisation et les variantes exposées ci-après, lesquelles sont à considérer individuellement ou selon toute combinaison techniquement opérante.

Dans un mode de réalisation, ladite première correction d'un effet débit est assurée par :

- une forme de goulotte adaptée, décalant un point de chute des particules en fonction de la quantité de particules présentes dans ladite goulotte ;
- une forme d'ouverture de trappe, décalant un point de chute des particules en fonction de la quantité de particules passant par l'ouverture de la trappe ; ou
- un nombre de pale supérieur à trois.

Dans un mode de réalisation, l'étape de détermination de la correction d'un effet vitesse tient compte en outre d'au moins une des informations appartenant au groupe comprenant :

- un type de particules ;
- un type de disque.

Dans une variante, la correction angulaire est dans le même sens de rotation du ou des disques qu'ils soient convergents ou divergents.

Dans une autre variante, la correction angulaire est dans un sens opposé au sens de rotation dudit disque.

Dans les deux variantes précédentes, la correction angulaire est horaire pour un disque droit, anti-horaire pour un disque gauche.

Lorsque N=1, la valeur absolue du coefficient $k_1$ est comprise entre 0,15 et 0,6. $\Delta\theta$ est exprimé en degré et la vitesse de déplacement est exprimée en km/h.

Dans un autre mode de réalisation, ladite correction d'un effet vitesse applique une modification $\Omega$ du régime de rotation du ou desdits disques, s'écrivant de la manière suivante : $\Delta\Omega = \sum_{i=0}^{N} l_i * V^i$ avec V la vitesse de déplacement, N est un entier supérieur ou égal à 1, et $l_i$ un coefficient déterminé.

Lorsque N=1, la valeur du coefficient $l_1$ est comprise entre -8 et -0,75. $\Delta\Omega$ est exprimé en TPM (tours par minute) et la vitesse de déplacement est exprimée en km/h.

Dans un autre mode de réalisation, ladite correction d'un effet vitesse applique une modification de l'inclinaison angulaire longitudinale, appelée Tilt, de l'épandeur ou de l'inclinaison du ou desdits disques s'écrivant de la manière suivante : $\Delta\text{Tilt} = \sum_{i=0}^{N} m_i * V^i$ , avec V la vitesse de déplacement, N est un entier supérieur ou égal à 1, et $m_i$ un coefficient déterminé. Une variation positive de $\Delta$Tilt signifie que, selon le sens d'avancement, l'épandeur est relevé à l'arrière, par exemple en raccourcissant mécaniquement la longueur du bras d'attelage supérieur de l'épandeur sur le tracteur.

Lorsque N=1, la valeur du coefficient $m_1$ est comprise entre -0,15 et -0,015. $\Delta$Tilt est exprimé en degré et la vitesse de déplacement est exprimée en km/h.

Pour les exemples précédents, lorsque i = 0, chaque coefficient est calculé pour que le paramètre P soit nul à une vitesse de déplacement prédéfinie (correspondant à la vitesse utilisée pour la détermination de la nappe de référence, c'est-à-dire une vitesse nulle ou faible).

Pour la valeur de modification du point d'alimentation, dans un exemple, $k_0$ est compris entre -6 et 0, de préférence -3 (il s'agit de degrés). Selon un autre exemple, $k_0$ est compris entre 0 et 6, de préférence 3 (il s'agit de réglage d'un point d'alimentation via une goulotte mobile avec des paramètres utilisés par le constructeur Sulky (marque déposée)).

Pour la valeur de modification du régime de rotation du disque : selon un exemple, $l_0$ est compris entre 0 et 90, de préférence 45 (il s'agit de TPM)..

Pour la valeur de modification de l'inclinaison de l'épandeur : selon un exemple, $m_0$ est compris entre 0 et 1,5, de préférence 0,75 (il s'agit de degrés).

Dans un mode de réalisation, ledit procédé comporte une étape initiale, en amont de l'épandage, de réalisation d'abaques répertoriant des valeurs de correction d'un effet vitesse en fonction du débit, de la vitesse et de la largeur de travail.

L'abaque tient compte :

- du type de particule ;
- de la largeur de travail ;
- du type de disque ;
- de l'angle d'attelage de l'épandeur centrifuge ;
- de la hauteur d'attelage de l'épandeur centrifuge par rapport au sol ;
- d'une vitesse de déplacement de l'épandeur centrifuge.

Dans un mode de réalisation, ladite correction d'un effet vitesse est déterminée par recours à au moins une modélisation et/ou au moins une simulation, réalisée en temps réel ou a priori.

Selon un deuxième aspect, la présente invention vise un épandeur centrifuge de particules selon la revendiation 11.

Selon l'invention ledit épandeur comprend une détermination d'une correction d'un effet vitesse se traduisant par une déformation et/ou un déplacement d'une forme de nappe au sol et/ou de répartition transversale en fonction d'une vitesse de déplacement (V) et agissant sur au moins un organe d'actionnement permettant de modifier la forme de la nappe au sol et/ou de la répartition transversale.

Les avantages, buts et caractéristiques particulières de cet épandeur étant similaires à ceux du procédé objet de la présente invention, ils ne sont pas rappelés ici.

Dans un mode de réalisation, l'épandeur centrifuge comporte des moyens pour, en amont de l'épandage, réaliser un ensemble d'abaques représentant la correction d'un effet vitesse à apporter au paramètre de l'épandeur centrifuge pour compenser l'effet vitesse sur la répartition transversale imputable à la vitesse de déplacement dudit épandeur centrifuge, voir figure 1B ou 1C.

Dans un mode de réalisation, l'épandeur centrifuge comporte des moyens pour réaliser des modélisations et/ou simulations en temps réel pendant l'épandage ou a priori pour déterminer la correction de l'effet vitesse à apporter à un organe d'actionnement.

L'épandeur centrifuge comporte une brique logicielle chargée de la correction de l'effet vitesse en temps réel.

Avantageusement, cette brique logicielle est intégrée à des systèmes logiciels classiquement utilisés dans le domaine de l'épandage.

**Brève description des figures**

D'autres avantages, buts et caractéristiques de la présente invention ressortent de la description qui est faite, dans un but explicatif et nullement limitatif, en regard des dessins annexés, dans lesquels :

[Fig. 1A] déjà citée représente de manière schématique les contours d'une nappe de produits distribués lors de l'épandage avec un distributeur centrifuge.
[Fig. 1B] La Figure 1B déjà citée représente de manière schématique l'impact de la vitesse de l'épandeur centrifuge sur la forme de la nappe d'épandage.
[Fig. 1C] La Figure 1C déjà citée représente de manière schématique l'impact de la vitesse de l'épandeur centrifuge sur la forme de la nappe d'épandage et les déplacements des points d'atterrissage des particules au sol.
[Fig. 2A] La figure 2A déjà citée représente le taux T de produits de part et d'autre du distributeur placé en une abscisse X nulle.
[Fig. 2B] La figure 2B déjà citée représente la répartition de produit après les passages successifs d'un épandeur centrifuge.
[Fig. 3] La figure 3 déjà citée représente la variation du coefficient de variation CV en fonction de la largeur de travail LT pour une configuration donnée d'épandage et trois vitesses de l'épandeur centrifuge : 0 km/h, 10 km/h et 20 km/h.
[Fig. 4] La figure 4 représente la forme générale d'une nappe d'épandage surfacique en trois dimensions (la dimension verticale représente la quantité surfacique de produit déposé au sol) ainsi que la répartition transversale qu'elle engendre après déplacement le long d'une trajectoire rectiligne suivie par l'épandeur.
[Fig. 5] La figure 5 représente un graphique de plusieurs passages successifs et complémentaires de l'épandeur.
[Fig. 6] La figure 6 représente un graphique d'une répartition transversale pour laquelle les paramètres de débit et de vitesse sont conformes à ceux qui ont permis les mesures de référence.
[Fig. 7] La figure 7 représente un graphique d'une répartition transversale montrant l'impact d'une augmentation de la vitesse.
[Fig. 8] La figure 8 représente schématiquement sous forme de graphique les corrections à apporter au réglage.
[Fig. 9] La figure 9 représente les étapes du procédé selon l'invention.
[Fig. 10] La figure 10 représente une brique logicielle selon l'invention placée en parallèle d'un système logiciel type DPA ou DPAE.
[Fig. 11] La figure 11 représente un schéma de deux disques en rotations dites divergentes d'un épandeur centrifuge, et des modifications à apporter aux points de dépose de l'engrais sur les disques pour compenser l'effet de la vitesse d'épandage sur la répartition transversale.

[Fig. 12] La figure 12 représente un exemple d'une courbe de correction angulaire du point de dépose de particules sur le disque selon une équation du premier degré.

[Fig. 13] La figure 13 représente un exemple d'une courbe de correction du régime de rotation des disques selon une équation du premier degré.

[Fig. 14] La figure 14 représente un schéma qui montre le réglage de l'inclinaison longitudinale de l'appareil ou des disques.

[Fig. 15] La figure 15 représente un exemple d'une courbe de réglage de correction de l'inclinaison de l'épandeur centrifuge ou des disques selon une équation du premier degré.

[Fig. 16] La figure 16 représente, sous forme de logigramme, des étapes de contrôle de la mise en oeuvre du procédé.

[Fig. 17] La figure 17 représente une vue schématique de l'ensemble du fonctionnement d'un épandeur centrifuge intégrant un exemple de mise en oeuvre du procédé de l'invention.

**Description des modes de réalisation**

En référence à la figure 4, la répartition transversale d'un épandage (RT) est issue du déplacement d'une nappe surfacique d'engrais le long d'une trajectoire dans la parcelle.

Sur la gauche du graphique, il est représenté la répartition transversale : traduction locale dans la parcelle après recouvrement longitudinal le long de la trajectoire.

Pour rappel, le taux de produit en un point est défini ici comme le rapport entre la dose de produit en ce point et la dose moyenne calculée en tenant compte des recouvrements successifs occasionnés par les divers passages de l'épandeur au cours de l'épandage.

Sur la droite du graphique, une nappe d'épandage surfacique en trois dimensions : réalité physique de l'épandage.

Le niveau d'homogénéité de la distribution finale est mesuré par la valeur du coefficient de variation (CV), qui se calcule, pour une largeur donnée, comme étant le rapport en pourcent de l'écart-type des valeurs de la RT après recouvrement des passages successifs et de la moyenne, voir figure 5. La largeur (optimale) de travail (Lw) est définie comme étant la distance entre deux passages successifs de l'épandeur dans la parcelle pour laquelle la valeur de CV est minimale (distance séparant le passage n du passage n-1 ou n de n+1 sur la figure 5). Le cumul de tous les passages apporte 100% de la dose et est représenté par les pointillés.

Ainsi, pour une Lw donnée, un produit donné, un épandeur et un ensemble de disques donné, un régime de disque donné, ⋯, il existe par exemple un angle $\theta_{NPF}$ optimal pour chacune des nappes d'épandage de l'épandeur tel que le CV soit minimal.

Il est ainsi possible d'écrire que $\theta_{NPFopt}$ = $f$ (Lw, Produit, Disque, TPMdisc, D, V,...), avec D le débit massique d'alimentation, V la vitesse d'épandage.

Le débit est hautement dépendant des paramètres V, Lw et Dose d'épandage cible (Q), selon l'équation $D$(V)=(Q.Lw.V)/600 avec 600 un coefficient correcteur de mise aux unités lorsque V est exprimé en km/h, Lw en m et Q en kg/ha.

Il faut donc retenir que, si l'on considère une configuration d'épandage donnée (Produit à épandre, Lw, Q, Epandeur, Disque, Régime, ⋯), l'équation devient $\theta_{NPFopt}$=(f(D(V),V))/(Lw,Dose,Produit,Disque,TPMDisc,...) Ici et par la suite, le symbole "/" ("slash") signifie "sachant que". TPMDisc est le régime de rotation du disque.

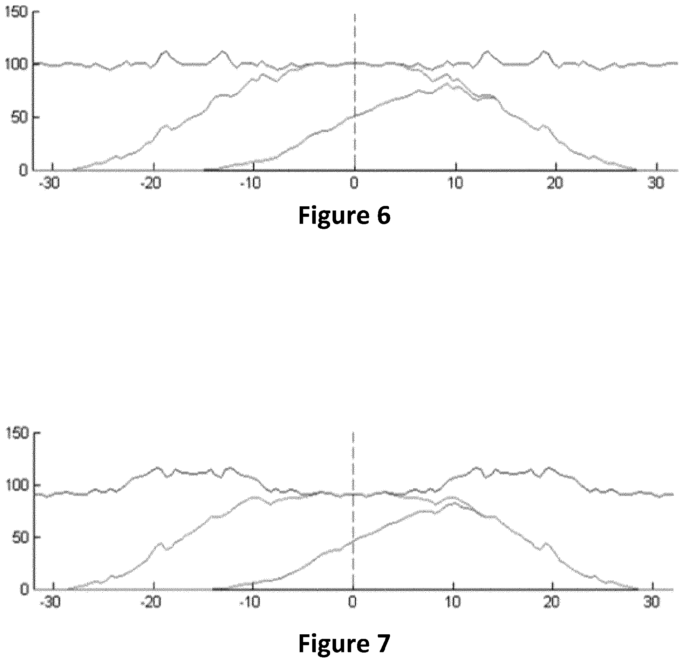

La figure 6 représente un graphique d'une répartition transversale pour laquelle les paramètres de débit et de vitesse sont conformes à ceux qui ont permis les mesures de référence. L'abscisse correspond à la distance à l'axe du passage (m) et l'ordonnée à la quantité épandue (%).

La figure 7 représente un graphique d'une répartition transversale montrant l'impact d'une augmentation de la vitesse. L'abscisse correspond à la distance à l'axe du passage (m) et l'ordonnée à la quantité épandue (%).

La vitesse d'épandage engendre l'addition d'une vitesse supplémentaire aux vecteurs vitesses des particules en sortie de disque. Ainsi, l'effet sur la nappe est inégal selon l'angle relatif à l'avancement de l'épandeur. Cela se traduit par une modification des lieux d'atterrissage des particules de produit au sol et engendre une distorsion de la nappe formée au sol et par suite par une modification de la répartition transversale du taux de produit et donc de l'homogénéité finale de la distribution (CV).

La présente invention permet l'amélioration de la répartition transversale d'un taux de produit. Le procédé corrige ladite distorsion.

Les corrections nécessaires sont ainsi exprimées en dérivant par rapport aux différents termes :

$$d\theta NPFopt = \qquad \frac{\partial\theta_{NPFopt}}{\partial D_{(V)}}.dD_{(V)} + \frac{\partial\theta_{NPFopt}}{\partial V}.dV /$$

$$( \text{Lw}, \text{Dose}, \text{Produit}, \text{Disque}, \text{TPM}_{Disc}, \dots )$$

Il est ainsi clairement visible que la correction de réglage de largeur nécessaire (ici *dθNPFopt*) provient pour une part d'un terme dû au débit et s'expliquant par l'occupation de la pale, et pour une autre d'un terme dû à la vitesse d'épandage et à la modification associée des trajectoires des particules dans l'air pendant le vol balistique.

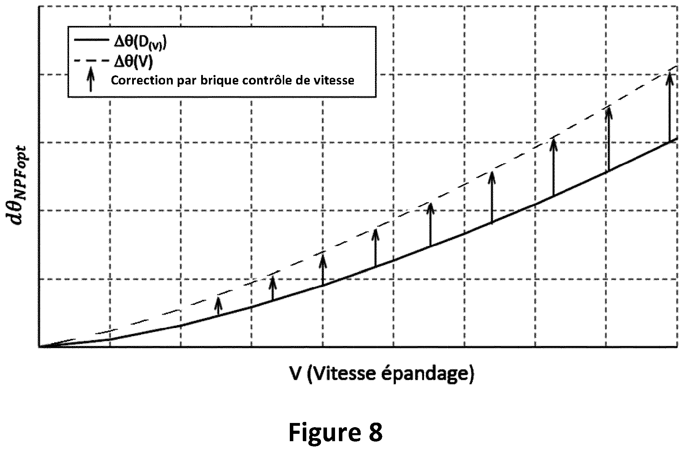

Le graphique de la figure 8 illustre schématiquement (formes de courbes non réalistes) l'apport de notre correction (brique de Contrôle de vitesse) en parallèle à un DPA ou DPAE.

Ainsi la brique de contrôle de vitesse corrige l'effet de distorsion dû la vitesse d'épandage et à son impact sur les trajectoires balistiques dans l'air (phase de vol balistique).

Les actionneurs de l'épandeur sur lesquels les corrections sont apportées permettent de corriger une distorsion de nappe d'épandage pour revenir à une RT idéale minimisant le CV à la Lw ciblée.

Les équations / abaques / tableaux donnant ces corrections améliorent la correction due à la vitesse d'épandage. Des exemples sont donnés ci-après.

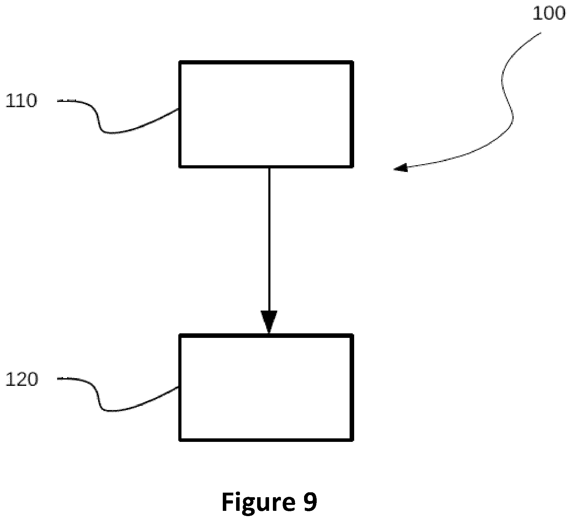

En référence à la figure 9, l'invention concerne un procédé 100 permettant de compenser l'effet de la vitesse de déplacement d'un épandage centrifuge monté sur un véhicule sur la qualité de la distribution transversale de l'épandage.

L'épandeur centrifuge considéré ici comporte :

- une trémie dans laquelle est stocké le produit, par exemple de les particules ;
- au moins un disque permettant de disperser les particules ;
- un système de distribution acheminant le produit depuis la trémie jusqu'à l'au moins un disque.

Par souci de simplification, il sera considéré que l'épandeur centrifuge comporte deux disques, ce qui est généralement le cas. Toutefois, l'invention peut s'appliquer à un nombre quelconque de disques qu'il tourne dans un sens ou dans un autre.

Afin de compenser l'effet de distorsion sur la nappe d'épandage, au moins un organe d'actionnement est amené à être ajusté au cours du procédé 100, individuellement ou en parallèle.

De manière générale, un paramètre P influant sur la forme de la nappe d'épandage peut être ajusté, par exemple :

- point de dépose des particules depuis le distributeur sur l'un et/ou l'autre des disques ;
- vitesse de rotation de chacun des disques ;
- angle d'inclinaison de l'épandeur centrifuge ;
- angle d'inclinaison de chacun des disques.

En référence à la figure 9, le procédé 100 selon l'invention comporte :

- une étape 110 mettant en oeuvre une première correction d'un effet d'une variation du débit d'alimentation en particules par rapport à un débit cible sur une répartition transversale desdites particules et/ou sur une nappe au sol couverte par lesdites particules, tenant compte d'une dose cible, d'une vitesse de déplacement V dudit épandeur centrifuge et d'une largeur de travail cible ;
- une étape 120 de détermination d'une correction d'un effet vitesse se traduisant par une déformation et/ou un déplacement d'une forme de répartition transversale réelle en fonction d'une vitesse de déplacement V réelle et agissant sur au moins un organe d'actionnement permettant de modifier la forme de la répartition transversale et/ou de la nappe au sol.

La qualité de distribution transversale se juge par un écart nul entre la forme de la répartition transversale réelle et celle de la répartition transversale cible. Les formes de répartitions transversales sont considérées après addition des apports des quantités de particules par les passages successifs dans la parcelle et latéralement décalés de la valeur de la largeur de travail, le plus souvent par exemple les formes de répartition transversale correspondant à une droite horizontale positionnée à la valeur 100% de la quantité globale de particules réellement distribuée.

Dans un premier mode de mise en oeuvre de l'invention illustré sur la figure 9, la détermination de la correction à apporter aux organes de réglage de l'épandeur se fait au moyen d'abaques.

Dans ce premier mode de mise en oeuvre, au cours d'une étape initiale, un ensemble d'abaques est réalisé, lesdits abaques permettant de déterminer la correction à apporter à au moins un organe d'actionnement pour corriger l'effet de distorsion de la nappe d'épandage en fonction de la vitesse de déplacement V du véhicule.

Ces abaques sont obtenus par exemple grâce à des modèles d'épandage et des simulateurs associés. Une étape d'optimisation permet la recherche de la meilleure correction qui est alors consignée dans l'abaque pour la vitesse correspondante.

Les abaques sont réalisés de la manière suivante :

- en appliquant un effet de vitesse de déplacement sur la nappe d'épandage ;
- en calculant la répartition transversale et les courbes de CV ;
- en cherchant le réglage optimal qui ramène le CV à sa valeur minimale pour la largeur de travail cible.

Ces abaques distinguent les corrections à apporter à au moins un organe d'actionnement en fonction de la forme de la répartition transversale. La forme de la répartition transversale dépend de la nature de l'engrais, des disques utilisés et de la largeur de travail.

Les abaques obtenus dépendent également de la nature du produit et du type d'épandeur centrifuge. La connaissance de ces données et de la géométrie au sol permet ensuite de déterminer, pour la largeur de travail cible, la forme de la répartition transversale associée. En particulier, la forme de la répartition transversale peut être modélisée selon la largeur de travail et l'aptitude balistique du produit à épandre.

La correction de l'effet vitesse à apporter peut ainsi être déterminée, dans le cas d'une correction apportée par action sur un seul organe d'actionnement, à l'aide de l'abaque correspondant audit organe et réalisé au cours de l'étape initiale.

Il est également possible de corriger la déformation de la nappe par modification de plusieurs organes d'actionnement. Dans ce cas, les organes d'actionnement peuvent être ajustés les uns après les autres, d'après les abaques correspondant à chacun des organes d'actionnement, jusqu'à obtenir la correction désirée.

Dans un second mode de mise en oeuvre du procédé selon l'invention, la correction à apporter est déterminée par recours à des modélisations et/ou simulations, réalisées en temps réel ou a priori.

Dans le cas où la correction doit être apportée à un seul organe d'actionnement, le résultat de la modélisation et/ou simulation peut être un vecteur de taille M x 1 où M est le nombre d'organes d'actionnement susceptibles d'être modifiés individuellement dans le cadre de la correction. Les coefficients de ce vecteur indiquent la correction à apporter à l'un ou l'autre des organes d'actionnement pour compenser l'effet de la vitesse. Le vecteur obtenu dépend donc de la vitesse V du véhicule.

Dans le cas où la correction doit être apportée à un seul organe d'actionnement ou en parallèle sur au moins deux organes d'actionnement, le résultat de la modélisation et/ou simulation peut être une matrice C carrée de taille M x M où M est le nombre d'organes d'actionnement susceptibles d'être modifiés individuellement, ou parallèlement, dans le cadre de la correction.

Bien entendu, les résultats de la modélisation et/ou simulation peuvent être sous une forme autre que matricielle.

La détermination de la correction peut aussi être réalisée en combinant les premier et second modes de réalisation. Dans tous les cas, la correction apportée aux organes d'actionnement est apportée en temps réel, au cours de l'épandage, et en fonction de la vitesse de déplacement V réelle mesurée au cours de l'étape de mesurage 120.

La compensation est envisagée en temps réel lors de l'épandage et adaptée à la vitesse réelle en chaque position de l'épandeur.

Cependant, dans un mode alternatif de mise en oeuvre de l'invention, il est aussi possible d'envisager une correction unique à la parcelle tenant compte de la vitesse moyenne de déplacement ciblée par l'opérateur. Dans un tel mode, la compensation à appliquer sur les organes d'actionnement de l'épandeur pourra être trouvée au moyen d'abaques et/ou de modèles et/ou de simulateurs. De la même manière, dans ce mode de mise en oeuvre de l'invention, il est envisageable d'agir sur des organes d'actionnement de l'épandeur difficilement accessibles en temps réel lors d'un épandage, par exemple le positionnement d'inclinaison horizontal des pales sur le disque.

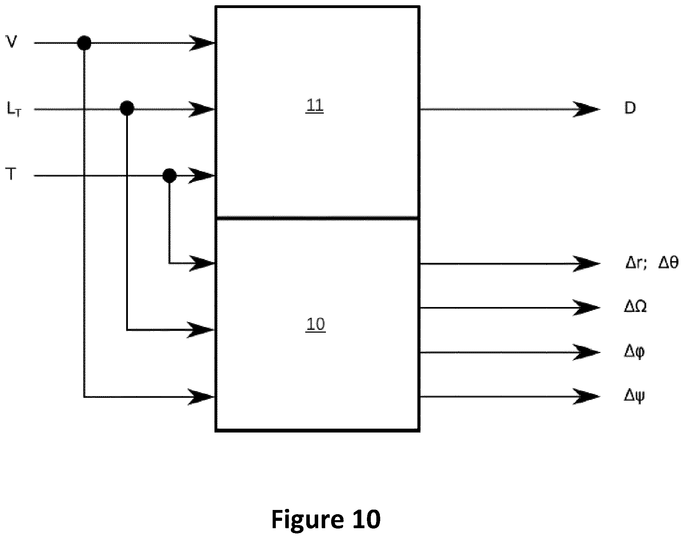

A titre illustratif, la figure 10 représente une brique logicielle 10 selon l'invention placée en parallèle d'un système logiciel 11 type DPA (Débit Proportionnel à l'Avancement) ou DPAE (Débit Proportionnel à l'Avancement Electronique).

De manière connue, le système logiciel 11 type DPA ou DPAE reçoit comme entrées :

- la vitesse de déplacement V de l'épandeur centrifuge ;
- la largeur de travail LT cible ;
- le dosage moyen de produit par unité de surface.

Le système logiciel 11 traite ces données d'entrée pour déterminer un débit D d'alimentation du produit aux disques rotatifs.

Il s'agit de la première correction tenant compte d'une dose cible, d'une vitesse de déplacement (V) dudit épandeur centrifuge et d'une largeur de travail cible.

Selon l'invention, les données d'entrée sont également envoyées à la brique logicielle 10, il s'agit de déterminer la correction d'un effet vitesse à partir de la largeur de travail, du type de particules et par exemple du type de disque.

Elles sont traitées par cette brique logicielle 10 pour fournir en sortie :

- une correction ($\Delta$r ; $\Delta\theta$) de la valeur de la position du point de dépose de l'engrais sur chacun des disques, ledit point étant caractérisé de manière non limitative sur la figure 10 par ses coordonnées polaires (r ; $\theta$) dans le repère local du disque distributeur considéré ;
- une correction $\Delta\Omega$ de la vitesse de rotation $\Omega$ des disques distributeurs, chacun des disques pouvant être indépendants et avoir sa propre vitesse de rotation ;
- une correction A Tilt de l'angle d'inclinaison Tilt de l'épandeur ;
- une correction $\Delta\psi$ de l'angle d'inclinaison $\psi$ de chacun des disques distributeurs.

Bien entendu, les paramètres d'un disque peuvent être traités indépendamment les uns des autres, ou bien en combinaison.

Les données présentées ci-après sont des valeurs d'exemples pour certaines corrections qui ont été obtenues avec une largeur de travail de 32m pour des distributions de particules au sol par les deux disques situés en moyenne à 17,5m de l'axe des disques et à +-10° de part et d'autre de l'axe d'avancement de l'épandeur (l'axe de référence étant la ligne longitudinale d'avancement de l'épandeur centrifuge partant de l'épandeur centrifuge et orientée vers l'arrière de l'épandeur centrifuge). Moyennant la correction d'offset $k_0$, les corrections présentées restent valables pour des configurations d'épandage du même engrais (même portée de projection moyenne de 17,5m) sur des largeurs allant de 28m (angle moyen de 0° , c'est-à-dire distribution axée sur la ligne d'avancement) à 36m (angle moyen de +-20° de part et d'autre de la ligne d'avancement).

**Pour le réglage angulaire**

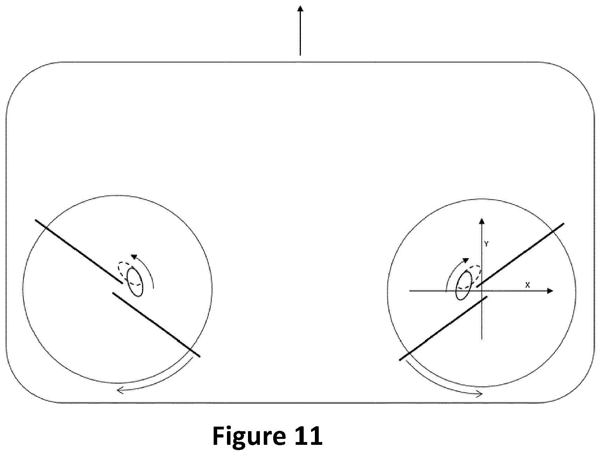

La figure 11 montre un schéma de deux disques en rotation de l'épandeur centrifuge. La flèche autour des disques montre leurs sens de rotation. Chaque disque montre deux pales. Il y a deux ovales, un en trait plein qui représente le point de dépose de particule et un autre en trait pointillé qui représente un point de dépose pour une vitesse supérieure à celle prédéfinie.

La flèche près des points de dépose correspond au sens croissant de la correction angulaire du point de dépose des particules sur chaque disque.

La flèche en haut du rectangle représente le sens de déplacement de l'épandeur centrifuge.

L'épandeur est muni de deux disques contrarotatifs dits à rotation divergente (les deux disques distribuent les particules du centre de l'appareil vers les extérieurs). Il en serait de même pour un épandeur à disques contrarotatifs à rotation convergente.

La zone d'alimentation peut se déplacer de manière rotative autour de l'axe de rotation du disque mais aussi autour d'un autre axe que celui du centre du disque. Par convention, et en référence à l'équation de correction indiquée ci-après, pour un disque droit, le sens croissant de la correction angulaire de cette zone de chute des particules sur le disque est le sens horaire, alors que c'est le sens anti-horaire pour un disque gauche.

Ce point de dépose peut aussi se déplacer selon les axes X et Y, ces derniers étant pour X aligné avec l'axe perpendiculaire à la direction de déplacement de l'épandeur (croissant dans le sens de gauche à droite de l'épandeur pour un disque droit), et pour Y longitudinal à ce même axe (croissant suivant le sens de déplacement).

L'équation indiquée ci-après pour un tel cas n'est donc qu'un exemple en mode rotation centrée sur l'axe du disque et des valeurs de variation sur X et Y pourraient être aussi utilisées.

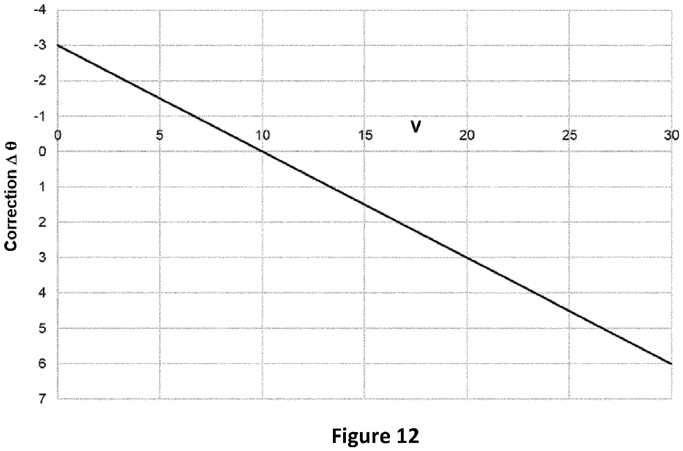

La figure 12 montre un exemple d'une courbe de correction angulaire avec une équation du premier degré.

L'équation en question s'écrit de la manière suivante : $\Delta\theta = \sum_{i=0}^{N} k_i * V^i$

L'équation selon l'exemple est du premier degré et s'écrit comme ceci :
$\Delta\theta = k_1 * V + k_0$ avec les valeurs numériques exemples suivantes (V en km/h et $\Delta\theta$ en ° ) : $k_1$ = 0,3 et $k_0$ = -3.

Il est ainsi visible que plus la vitesse de déplacement est importante, plus l'angle de dépose des particules sur les disques doit être important selon la convention indiquée sur le schéma explicatif préalable.

Selon un mode de repérage en (X, Y) du point de dépose ou sur la zone de chute des particules sur le disque, cela peut aussi être traduit par le fait qu'une augmentation de V doit s'accompagner d'un décalage du point de chute des particules sur le disque selon des valeurs de Y croissantes (vers l'avant de l'épandeur) et potentiellement selon des valeurs de X croissantes (vers la droite de l'épandeur pour le disque droit).

Dans un exemple de réglage X, Y, $k_0$ est défini par le passage par 0 pour la valeur V de vitesse de déplacement égale à 10km/h. Selon cet exemple, la constante $k_1$ est comprise entre 0,15 et 0,6.

Selon un autre exemple, $k_1$ = -0,273 et $k_0$ = 3. Selon cet autre exemple, la constante $k_1$ est compris entre -0.5 et -0,1.

### Réglage du régime de rotation des disques d'épandage

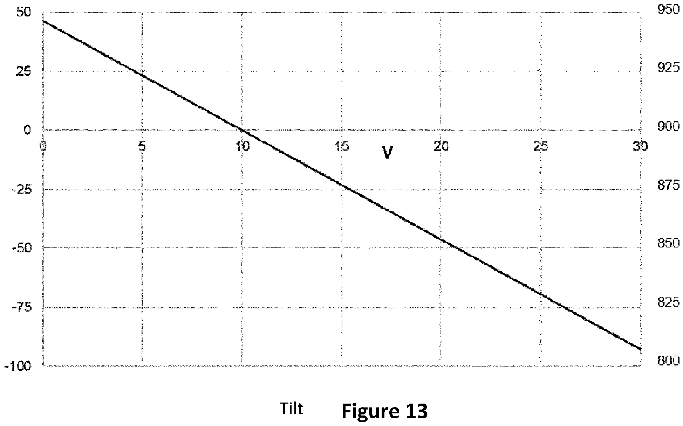

La figure 13 montre un exemple d'une courbe de correction du régime de rotation des disques avec une équation du premier degré.

Sur le schéma l'ordonnée de gauche correspond à la correction en $\Delta\Omega$ et l'ordonnée de droite correspond au régime de rotation du disque $\Omega$.

L'axe sur la droite est pour montrer les valeurs de régimes de rotation des disques réellement mises en oeuvre dans un cas de réalisation pour lequel le régime de référence pour le disque à V=10km/h est 900 TPM.

L'équation en question s'écrit de la manière suivante : $\Delta\Omega = \sum_{i=0}^{N} l_i * V^i$.

L'équation selon l'exemple est du premier degré et s'écrit comme ceci :

$\Delta\Omega = l_1 * V + l_0$ avec les valeurs numériques exemples suivantes (V en km/h et Correction $\Delta\Omega$ en TPM) : $l_1$ = -4,64 et $l_0$ = 45. Selon cet exemple, la constante $l_1$ est comprise entre -8 et -0,75.

Il est ainsi visible que plus la vitesse de déplacement est importante, plus la valeur de Correction $\Delta\Omega$ doit être faible, ce qui se traduit par un régime de rotation du disque plus faible.

### Réglage de l'inclinaison longitudinale de l'épandeur centrifuge ou des disques

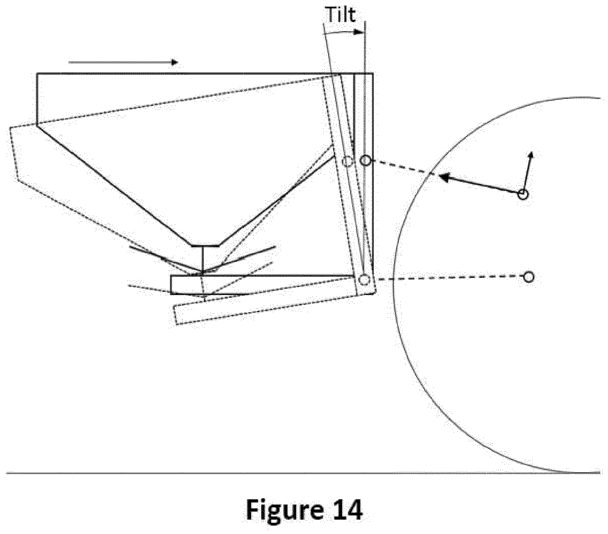

La figure 14 montre un schéma qui montre le réglage de l'inclinaison longitudinale de l'appareil ou des disques selon un exemple de réalisation avec une roue qui est posé sur le sol. Le tracteur, représenté par sa roue, comporte un attelage de l'épandeur centrifuge. Sur le schéma, une flèche sur la droite indique le sens d'avancement.

Il convient ici de comprendre qu'un angle de correction de tilt négatif provoque une « baisse » de l'épandeur vers l'arrière selon le sens d'avancement de l'épandeur.

Un angle positif de correction du tilt de l'épandeur centrifuge est obtenu mécaniquement par un raccourcissement (sens négatif) du bras le plus haut d'attelage de l'épandeur sur le tracteur (représenté en partie en trait pointillé et avec une flèche).

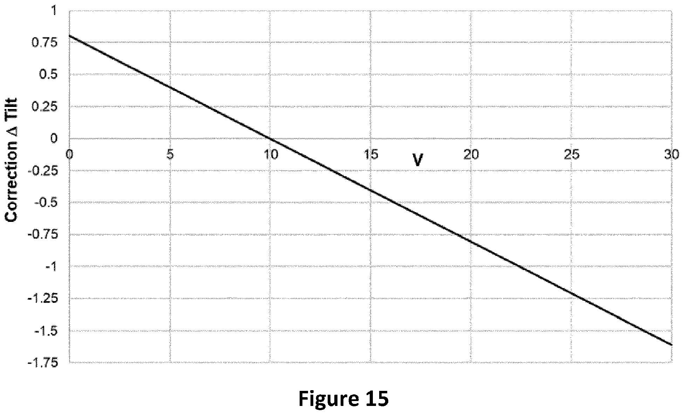

La figure 15 montre un exemple d'une courbe de réglage de correction de l'inclinaison de l'épandeur centrifuge ou des disques avec une équation du premier degré.

L'équation en question s'écrit de la manière suivante : $\Delta\text{Tilt} = \sum_{i=0}^{N} m_i * V^i$

L'équation selon l'exemple est du premier degré et s'écrit comme ceci :

$\Delta\text{Tilt} = m_1 * V + m_0$ avec les valeurs numériques exemples suivantes (V en km/h et Correction $\Delta\text{Tilt}$ en ° ) : $m_1$ = -0,0804 et $m_0$ = 0,8. Selon cet exemple, la constante $m_1$ est comprise entre -0,15 et -0,015.

Il est ainsi visible que plus la vitesse de déplacement est importante, plus la valeur de Correction $\Delta\text{Tilt}$ doit être faible, ce qui se traduit par une inclinaison de l'épandeur vers l'arrière dans le sens de déplacement de l'épandeur.

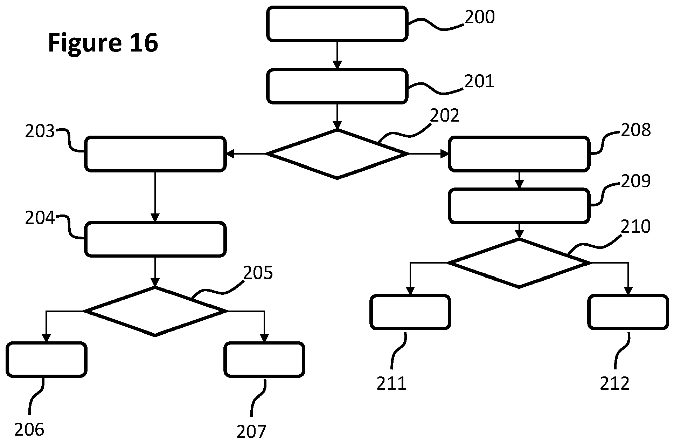

La figure 16 montre un exemple de contrôle de la mise en oeuvre et du bon fonctionnement du procédé.

Ce contrôle peut être réalisé sans amener l'épandeur dans une parcelle, y compris sans possibilité de liaison à un GPS ou moyen de mesure des conditions climatiques extérieures. Il convient de disposer de moyens techniques permettant simulation et envoi à la console de pilotage de l'épandeur pour constater des informations nécessaires au fonctionnement comme la vitesse, la dose cible, la largeur de travail cible et le débit.

Selon un exemple, il suffit de disposer :

- de l'épandeur à tester ;
- des moyens de pilotage de cet épandeur (console, ⋯) ;
- d'une batterie ou source de puissance électrique pour alimenter les actuateurs et les organes de pilotage de l'épandeur ;
- éventuellement d'une source hydraulique correctement dimensionnée si les moyens d'action sont des organes hydrauliques (par exemple tilt de l'appareil, variation de régime de disque entraînés hydrauliquement, ⋯ ;
- d'un tableau de synthèse permettant le relevé manuel :

    - des paramètres de réglage de l'épandeur, successivement modifiés via la console de pilotage dudit épandeur ;
    - des actions engendrées par ces paramètres successivement modifiés sur les organes clés de l'épandeur (position de la goulotte, régime de disque, Tilt, position angulaire du point d'alimentation, ⋯). Eventuellement, il convient de se munir d'un réglet gradué, ou tout autre instrument de mesure adapté à la configuration, permettant des mesures de position desdits organes clés (dans le cas où l'épandeur n'est pas muni de repères repérant la (les) position (s) desdits organes clés.

Le logigramme de détection suivant est un exemple pour une solution mettant en oeuvre une goulotte. Il est possible de traduire de la même façon l'ensemble des autres approches agissant sur l'effet vitesse (régime de disque, "Tilt", position angulaire du point d'alimentation, ⋯)

L'étape 200 représente l'étape de configuration pour la goulotte : l'épandeur est mis en configuration d'épandage, réglé pour une largeur de travail initiale, une dose (exprimé par exemple en kg/ha), et une vitesse de travail. Le réglage de largeur (la position de la goulotte pour notre exemple) adopté pour ces réglages initiaux est relevé soit sur l'électronique ou l'informatique de l'épandeur, soit directement sur les actuateurs de l'épandeur (position de la goulotte dans notre exemple).

L'étape 201 consiste à modifier la dose cible : Multiplication de la dose par 2 par exemple (les autres paramètres, dont la vitesse, sont gardés fixes).

L'étape 202 consiste à identifier les conséquences éventuelles de cette modification de dose cible sur l'organe de réglage de la largeur de travail, la position de réglage de la goulotte dans notre exemple. S'il y a eu une action, on va à l'étape 203, sinon on va à l'étape 208.

A l'étape 203, l'électronique de pilotage de l'épandeur met en oeuvre un asservissement destiné à corriger l'effet débit induit par la modification qu'engendre la modification de dose cible sur le débit et donc sur la quantité de granulés d'engrais accélérée par chaque pale.

L'étape 204 consiste à revenir à la dose initiale (correspondant à la dose de l'étape 200), puis à modifier la vitesse de travail d'un facteur 2 (les autres paramètres étant gardés fixes). Ainsi le débit (exprimé par exemple en kg/mn) est ramené à la même valeur que celle suite à l'étape 201. Une action sur le réglage de l'organe de gestion de la largeur de travail, la goulotte dans notre exemple, accompagne cette modification de la vitesse de travail V.

L'étape 205 consiste donc à regarder si la modification de la position de l'organe de gestion de la largeur de travail, la goulotte dans notre exemple, est la même valeur que celle constatée après l'étape 201. Si la réponse est oui, on va à l'étape 206, si la réponse est non, on va à l'étape 207.

A l'étape 206, on constate que le procédé n'a pas été mis en oeuvre, puisque le changement de vitesse générant le même débit n'a pas eu d'effet distinct de l'étape de 201 (il n'y a pas de correction de l'effet vitesse, mais seulement de l'effet débit). A l'étape 207, le procédé de l'invention est mis en oeuvre, car la modification de la vitesse de travail a généré une action complémentaire à la compensation de l'effet débit sur la RT, directement correctrice de l'effet de vitesse.

A l'étape 208, on en déduit que l'électronique de pilotage de l'épandeur n'est pas dotée d'un asservissement destiné à corriger l'effet débit, et que cette correction de l'effet débit est assurée par un autre moyen.

L'étape 209 consiste à modifier la vitesse de travail (les autres paramètres sont gardés fixes).

L'étape 210 consiste à regarder s'il y a eu une modification de la position de réglage de l'organe de gestion de la largeur de travail, la goulotte dans notre exemple. Si la réponse est oui, on va à l'étape 211, si la réponse est non, on va à l'étape 212.

A l'étape 211, on constate que le procédé de l'invention est mis en oeuvre, la prise en compte de l'effet vitesse étant effective, car la modification de la vitesse de travail a généré une action sur le réglage de largeur indépendant de l'effet débit. A l'étape 212, on constate que le procédé de l'invention n'est pas mis en oeuvre, il n'y a pas de prise en compte de l'effet vitesse.

Dans les étapes du logigramme de détection ci-dessus, tout facteur multiplicatif différent de 2 peut être utilisé.

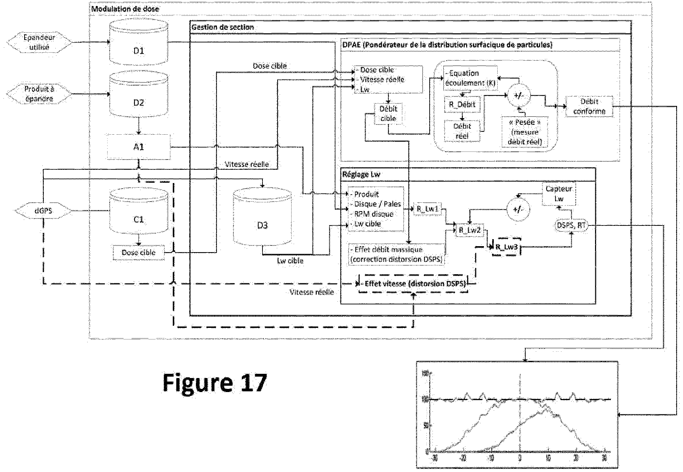

La figure 17 montre un exemple de système complet selon l'invention, illustrant que la vitesse (appelée ici "vitesse réelle"), délivrée ici par un GPS différentiel (dGPS) alimente deux modules distincts :

- un module DPAE, déterminant le débit, selon une technique connue, en tenant compte d'une dose cible, de la vitesse réelle et de la largeur de travail souhaitée (Lw) ;
- un module de réglage de la largeur de travail (Réglage Lw) qui met en oeuvre selon cet exemple, trois opérations successives :

   a. R_Lw1 : un premier réglage d'un ou plusieurs paramètres est déterminé pour s'approcher de la largeur cible (Lw cible), fournie à tout instant par une base de données, en fonction de la position de l'épandeur le long de sa trajectoire d'épandage, des caractéristiques du produit à épandre, des caractéristiques des disques d'épandage et de leur vitesse de rotation ;
   b. R_Lw2 : un réglage complémentaire tient compte de l'effet débit, en fonction du débit cible ;
   c. R_Lw3 : enfin, selon l'invention, un troisième réglage est appliqué, tenant compte spécifiquement de la vitesse réelle, pour tenir compte de l'effet vitesse.

Le pointillé sur le schéma montre où se situe l'étape du procédé concernant la correction d'un effet vitesse. On détermine l'effet vitesse (la distorsion générée sur la distribution spatiale des particules au sol induite par la vitesse), pour agir sur le réglage de la largeur (R_Lw3). Cet aspect tient compte de la vitesse réelle, ainsi que des caractéristiques du produit à épandre.

En pratique, dans d'autres modes de réalisation, le réglage de la largeur de travail pourrait être effectué en seulement une ou deux opérations, à l'aide d'équations adaptées tenant compte des différents paramètres. Par ailleurs, comme indiqué précédemment, le réglage relatif à l'effet débit (R_Lw2) peut dans certains modes de réalisation ne pas être mis en oeuvre sous la forme d'un calcul, mais à l'aide de moyens adaptés connus.

Le lexique de cette figure est le suivant :

- DSPS : Distribution Spatiale des Particules au Sol (aussi dénommée nappe au sol)
- Lw : Largeur de travail
- R_Lw : Réglage de largeur de travail, par exemple Goulotte
- R_débit : Réglage de Débit massique
- RT : répartition Transversale
- D1 :DataBase caractéristiques épandeur
- D2 : DataBase caractéristiques produit
- D3 : DataBase des Lw le long de la trajectoire d'épandage
- A1 : Aptitudes épandage, Tableaux de réglage
- C1 : Cartographie des doses à épandre

La courbe résultant de ces réglages illustre l'objectif de maintenir constante la répartition transversale d'un taux de particules, en prenant en compte d'une part l'effet débit, et d'autre part et en complément l'effet vitesse (indépendamment du débit).

**Revendications**

1. Procédé de réglage d'un épandeur centrifuge de particules, ledit épandeur mettant en oeuvre une première correction d'un effet, dit effet débit, d'une variation du débit d'alimentation en particules par rapport à un débit cible sur une nappe au sol couverte par lesdites particules et/ou sur une répartition transversale desdites particules, tenant compte d'une dose cible, d'une vitesse de déplacement (V) dudit épandeur centrifuge et d'une largeur de travail cible,

   ledit procédé comprend en outre une étape de détermination d'une correction d'un effet vitesse se traduisant par une déformation et/ou un déplacement d'une forme de nappe au sol et/ou de répartition transversale en fonction d'une vitesse de déplacement (V) et agissant sur au moins un organe d'actionnement permettant de modifier la forme de la nappe au sol et/ou de la répartition transversale, dont l'étape de détermination de la correction d'un effet vitesse détermine ou modifie ou délivre un paramètre (P) appartenant au groupe comprenant :

   - un paramètre modifiant un point d'alimentation des particules sur le disque ;
   - un paramètre modifiant une inclinaison du ou desdits disques ;
   - un paramètre modifiant un régime de rotation du ou desdits disques ;
   - un paramètre modifiant une inclinaison de l'épandeur centrifuge ;

   **caractérisé en ce que** ladite correction d'un effet vitesse applique au point de dépose un décalage angulaire $\Delta\theta$ selon un angle centré sur un axe du disque concerné, s'écrivant de la manière suivante :

   $$\Delta\theta = \sum_{i=0}^{N} k_i * V^i$$ avec V la vitesse de déplacement, N est un entier supérieur ou égal à 1, et $k_i$ un coefficient déterminé.

2. Procédé selon la revendication 1, dans lequel ladite première correction d'un effet débit est assurée par :

   - une forme de goulotte adaptée, décalant un point de chute des particules en fonction de la quantité de particules présentes dans ladite goulotte ;
   - une forme d'ouverture de trappe, décalant un point de chute des particules en fonction de la quantité de particules passant par l'ouverture de la trappe ; ou
   - un nombre de pale supérieur à trois.

**3.** Procédé selon la revendication 1, dans lequel l'étape de détermination de la correction d'un effet vitesse tient compte en outre d'au moins une des informations appartenant au groupe comprenant :

 - un type de particules ;
 - un type de disque.

**4.** Procédé selon la revendication 1, dans lequel lorsque N=1, la valeur absolue du coefficient $k_1$ est comprise entre 0,15 et 0,6, $\Delta\theta$ étant exprimé en degré et la vitesse de déplacement (V) étant exprimée en km/h.

**5.** Procédé selon la revendication 1, dans lequel ladite correction d'un effet vitesse applique une modification $\Omega$ du régime de rotation du ou desdits disques, s'écrivant de la manière suivante : $\Delta\Omega = \sum_{i=0}^{N} l_i * V^i$ avec V la vitesse de déplacement, N est un entier supérieur ou égal à 1, et $l_i$ un coefficient déterminé.

**6.** Procédé selon la revendication 5, dans lequel lorsque N=1, la valeur du coefficient $l_1$ est compris entre -8 et -0,75, avec $\Delta\Omega$ exprimé en TPM (tours par minute) et la vitesse de déplacement (V) exprimée en km/h.

**7.** Procédé selon la revendication 1, dans lequel ladite correction d'un effet vitesse applique une modification de l'inclinaison angulaire longitudinale, appelée Tilt, de l'épandeur ou de l'inclinaison du ou desdits disques s'écrivant de la manière suivante : $\Delta\text{Tilt} = \sum_{i=0}^{N} m_i * V^i$, avec V la vitesse de déplacement, N est un entier supérieur ou égal à 1, et $m_i$ un coefficient déterminé.

**8.** Procédé selon la revendication 7, dans lequel lorsque N=1, la valeur du coefficient $m_1$ est comprise entre -0,15 et -0,015; avec $\Delta\text{Tilt}$ exprimé en degré et la vitesse de déplacement (V) exprimée en km/h.

**9.** Procédé selon l'une des revendications 1 à 8, dans lequel ledit procédé comporte une étape initiale, en amont de l'épandage, de réalisation d'abaques répertoriant des valeurs de correction d'un effet vitesse en fonction du débit, de la vitesse et de la largeur de travail.

**10.** Procédé selon l'une des revendications 1 à 8, dans lequel ladite correction d'un effet vitesse est déterminée par recours à au moins une modélisation et/ou au moins une simulation.

**11.** Epandeur centrifuge de particules équipé d'au moins un disque rotatif et un moyen de distribution desdites particules par rapport au ou à chacun desdits disques, ledit épandeur comprenant une première correction d'un effet, dit effet débit, d'une variation du débit d'alimentation en particules par rapport à un débit cible sur une nappe au sol couverte par lesdites particules et/ou sur une répartition transversale desdites particules, tenant compte d'une dose cible, d'une vitesse de déplacement (V) dudit épandeur centrifuge et d'une largeur de travail cible, ledit épandeur comprenant une brique logicielle configurée pour exécuter une étape de détermination d'une correction d'un effet vitesse se traduisant par une déformation et/ou un déplacement d'une forme de nappe au sol et/ou de répartition transversale en fonction d'une vitesse de déplacement (V) et agissant sur au moins un organe d'actionnement permettant de modifier la forme de la nappe au sol et/ou de la répartition transversale, **caractérisé en ce que** ladite correction d'un effet vitesse applique au point de dépose un décalage angulaire $\Delta\theta$ selon un angle centré sur un axe du disque concerné, s'écrivant de la manière suivante : $\Delta\theta = \sum_{i=0}^{N} k_i * V^i$ avec V la vitesse de déplacement, N est un entier supérieur ou égal à 1, et $k_i$ un coefficient déterminé.

**Patentansprüche**

**1.** Verfahren zum Einstellen eines Schleuderstreuers für Teilchen, wobei der Streuer eine erste Korrektur eines Effekts, den sogenannten Durchflussrateneffekt, einer Veränderung der Teilchenzufuhrdurchflussrate in Bezug auf eine Zieldurchflussrate auf einer mit den Teilchen bedeckten Bodenplane und/oder auf einer Querverteilung der Teilchen unter Berücksichtigung einer Zieldosis, einer Bewegungsgeschwindigkeit (V) des Schleuderstreuers und einer Zielarbeitsbreite durchführt,

wobei das Verfahren ferner einen Schritt des Bestimmens einer Korrektur eines Geschwindigkeitseffekts umfasst, der zu einer Verformung und/oder einer Verschiebung einer Form der Bodenplane und/oder einer Querverteilung in Abhängigkeit von einer Bewegungsgeschwindigkeit (V) führt und mindestens ein Betätigungselement beeinflusst, das es ermöglicht, die Form der Bodenplane und/oder der Querverteilung zu verändern, wobei der Schritt des Bestimmens der Korrektur eines Geschwindigkeitseffekts einen Parameter (P) bestimmt, modifiziert oder liefert, der zur Gruppe gehört, die Folgendes umfasst:

- einen Parameter, der einen Teilchenzufuhrpunkt auf der Scheibe modifiziert;
- einen Parameter, der eine Neigung der Scheibe(n) modifiziert;
- einen Parameter, der eine Drehzahl der Scheibe(n) modifiziert;
- einen Parameter, der eine Neigung des Schleuderstreuers modifiziert;

**dadurch gekennzeichnet, dass** die Korrektur eines Geschwindigkeitseffekts auf den Ablagepunkt einen Winkelversatz $\Delta\theta$ gemäß einem Winkel anwendet, der auf einer Achse der betreffenden Scheibe zentriert ist, der wie folgt lautet: $\Delta\theta = \sum_{i=0}^{N} k_i * V^i$, wobei V die Bewegungsgeschwindigkeit ist, N eine ganze Zahl größer gleich 1 ist und $k_i$ ein bestimmter Koeffizient ist.

2. Verfahren nach Anspruch 1, wobei die erste Korrektur eines Durchflussrateneffekts sichergestellt wird durch:

- eine geeignete Form der Ablaufrinne, die den Abwurfpunkt der Teilchen in Abhängigkeit von der in der Ablaufrinne vorhandenen Menge der Teilchen versetzt;
- eine Form einer Klappenöffnung, die einen Abwurfpunkt der Teilchen in Abhängigkeit von der Menge der Teilchen, die die Öffnung der Klappe passiert, versetzt; oder
- eine Anzahl von Schaufeln, die mehr als drei beträgt.

3. Verfahren nach Anspruch 1, wobei der Schritt des Bestimmens der Korrektur eines Geschwindigkeitseffekts auch mindestens eine der Informationen berücksichtigt, die zur Gruppe gehören, die Folgendes umfasst:

- eine Teilchenart;
- eine Scheibenart.

4. Verfahren nach Anspruch 1, wobei, wenn N = 1, der Absolutwert des Koeffizienten $k_1$ zwischen 0,15 und 0,6 beträgt, wobei $\Delta\theta$ in Grad ausgedrückt wird und die Bewegungsgeschwindigkeit (V) in km/h ausgedrückt wird.

5. Verfahren nach Anspruch 1, wobei die Korrektur eines Geschwindigkeitseffekts eine Modifikation $\Omega$ der Drehzahl der Scheibe(n) anwendet, die wie folgt lautet: $\Delta\Omega = \sum_{i=0}^{N} l_i * V^i$, wobei V die Bewegungsgeschwindigkeit ist, N eine ganze Zahl größer gleich 1 ist und $l_i$ ein bestimmter Koeffizient ist.

6. Verfahren nach Anspruch 5, wobei, wenn N = 1, der Wert des Koeffizienten $l_i$ zwischen -8 und -0,75 beträgt, wobei $\Delta\Omega$ in TPM (Umdrehungen pro Minute) ausgedrückt wird und die Bewegungsgeschwindigkeit (V) in km/h ausgedrückt wird.

7. Verfahren nach Anspruch 1, wobei die Korrektur eines Geschwindigkeitseffekts eine Modifikation der Längswinkelneigung, Tilt genannt, des Streuers oder der Neigung der Scheibe(n) anwendet, die wie folgt lautet: $\Delta\mathrm{Tilt} = \sum_{i=0}^{N} m_i * V^i$, wobei V die Bewegungsgeschwindigkeit ist, N eine ganze Zahl größer gleich 1 ist und $m_i$ ein bestimmter Koeffizient ist.

8. Verfahren nach Anspruch 7, wobei, wenn N = 1, der Wert des Koeffizienten $m_i$ zwischen -0,15 und -0,015 beträgt; wobei $\Delta\mathrm{Tilt}$ in Grad ausgedrückt wird und die Bewegungsgeschwindigkeit (V) in km/h ausgedrückt wird.

9. Verfahren nach einem der Ansprüche 1 bis 8, wobei das Verfahren vor dem Streuen einen ersten Schritt des Erstellens von Diagrammen mit Korrekturwerten für einen Geschwindigkeitseffekt in Abhängigkeit von der Durchflussrate, der Geschwindigkeit und der Arbeitsbreite.

10. Verfahren nach einem der Ansprüche 1 bis 8, wobei die Korrektur eines Geschwindigkeitseffekts durch Rückgriff auf mindestens eine Modellierung und/oder mindestens eine Simulation bestimmt wird.

11. Schleuderstreuer für Teilchen, der mit mindestens einer Drehscheibe und einem Mittel zum Verteilen der Teilchen in Bezug auf jede der Scheiben ausgestattet ist, wobei der Streuer eine erste Korrektur eines Effekts, den sogenannten Durchflussrateneffekt, einer Veränderung der Teilchenzufuhrdurchflussrate in Bezug auf eine Zieldurchflussrate auf einer mit den Teilchen bedeckten Bodenplane und/oder auf einer Querverteilung der Teilchen unter Berücksichtigung einer Zieldosis, einer Bewegungsgeschwindigkeit (V) des Schleuderstreuers und einer Zielarbeitsbreite umfasst,

wobei der Streuer eine Softwarekomponente umfasst, die dazu konfiguriert ist, einen Schritt des Bestimmens einer Korrektur eines Geschwindigkeitseffekts auszuführen, der zu einer Verformung und/oder einer Verschiebung einer Form der Bodenplane und/oder einer Querverteilung in Abhängigkeit von einer Bewegungsgeschwindigkeit (V) führt und mindestens ein Betätigungselement beeinflusst, das es ermöglicht, die Form der Bodenplane und/oder der Querverteilung zu verändern, **dadurch gekennzeichnet, dass** die Korrektur eines Geschwindigkeitseffekts auf den Ablagepunkt einen Winkelversatz $\Delta\theta$ gemäß einem Winkel anwendet, der auf einer Achse der betreffenden Scheibe zentriert ist, der wie folgt lautet: $\Delta\theta = \sum_{i=0}^{N} k_i * V^i$ , wobei V die Bewegungsgeschwindigkeit ist, N eine ganze Zahl größer gleich 1 ist und $k_i$ ein bestimmter Koeffizient ist.

## Claims

1. A method for adjusting a centrifugal particle spreader, said spreader implementing a first correction of an effect, called flowrate effect, of a variation in the particle feed flowrate relative to a target flowrate on a ground sheet covered by said particles and/or on a transverse distribution of said particles, taking into account a target dose, a speed of movement (V) of said centrifugal spreader and a target working width,

said method further comprises a step of determining a correction of a speed effect resulting in a deformation and/or a movement of a shape of the ground sheet and/or the transverse distribution according to a speed of movement (V) and acting on at least one actuating member allowing to modify the shape of the ground sheet and/or the transverse distribution, whose step of determining the correction of a speed effect determines or modifies or delivers a parameter (P) belonging to the group comprising:

- a parameter modifying a particle feed point on the disc;
- a parameter modifying an inclination of said disc(s);
- a parameter modifying a rotation speed of said disc(s);
- a parameter modifying an inclination of the centrifugal spreader;

**characterised in that** said correction of a speed effect applies to the deposit point an angular offset $\Delta\theta$ according to an angle centred on an axis of the concerned disc, written as follows: $\Delta\theta = \sum_{i=0}^{N} k_i * V^i$ with V the speed of movement, N is an integer greater than or equal to 1, and $k_i$ a determined coefficient.

2. The method according to claim 1, wherein said first correction of a flowrate effect is ensured by:

- a suitable shape of chute, shifting a drop point of the particles according to the amount of particles present in said chute;
- a shape of trap opening, shifting a drop point of the particles according to the amount of particles passing through the opening of the trap; or
- a number of blades greater than three.

3. The method according to claim 1, wherein the step of determining the correction of a speed effect further takes into account at least one of the pieces of information belonging to the group comprising:

- a type of particle;
- a type of disc.

4. The method according to claim 1, wherein when N = l, the absolute value of the coefficient $k_1$ is comprised between 0.15 and 0.6, $\Delta\theta$ being expressed in degrees and the speed of movement (V) being expressed in km/h.

5. The method according to claim 1, wherein said correction of a speed effect applies a modification $\Omega$ of the rotation rate of said disc(s), written as follows: $\Delta\Omega = \sum_{i=0}^{N} l_{i*}V^i$ with V the speed of movement, N is an integer greater than or equal to 1, and $l_i$ a determined coefficient.

6. The method according to claim 5, wherein when N = l, the value of the coefficient $l_1$ is comprised between -8 and -0.75, with $\Delta\Omega$, expressed in RPM (revolutions per minute) and the speed of movement (V) expressed in km/h.

7. The method according to claim 1, wherein said correction of a speed effect applies a modification of the longitudinal angular inclination, called Tilt, of the spreader or of the inclination of said disc(s) being written as follows: $\Delta Tilt = \sum_{i=0}^{N} m_{i*}V^i$ , with V the speed of movement, N is an integer greater than or equal to 1, and $m_i$ a determined coefficient.

8. The method according to claim 7, wherein when N = l, the value of the coefficient $m_1$ is comprised between -0.15 and -0.015; with $\Delta Tilt$ expressed in degrees and the speed of movement (V) expressed in km/h.

9. The method according to one of claims 1 to 8, wherein said method includes an initial step, upstream of the spreader, of producing charts listing correction values of a speed effect according to the flowrate, to the speed and to the working width.

10. The method according to one of claims 1 to 8, wherein said correction of a speed effect is determined by using at least one modelling and/or at least one simulation.

11. A centrifugal particle spreader equipped with at least one rotating disc and means for distributing said particles relative to or each of said discs, said spreader comprising a first correction of an effect, called flowrate effect, of a variation in the particle feed flowrate relative to a target flowrate on a ground sheet covered by said particles and/or on a transverse distribution of said particles, taking into account a target dose, a speed of movement (V) of said centrifugal spreader and a target working width, said spreader comprising a software component configured to execute a step of determining a correction of a speed effect resulting in a deformation and/or a movement of a shape of the ground sheet and/or the transverse distribution according to a speed of movement (V) and acting on at least one actuating member allowing to modify the shape of the ground sheet and/or the transverse distribution, **characterised in that** said correction of a speed effect applies to the deposit point an angular offset $\Delta\theta$ according to an angle centred on an axis of the concerned disc, written as follows: $\Delta\theta = \sum_{i=0}^{N} k_{i*}V^i$ with V the speed of movement, N is an integer greater than or equal to 1, and $k_i$ a determined coefficient.

Figure 1A

Figure 1B

**Figure 1C**

**Figure 2A**

**Figure 2B**

**Figure 3**

**Figure 4**

n -1                    n                    n +1

**Figure 5**

**Figure 6**

**Figure 7**

Figure 8

**Figure 9**

**Figure 10**

**Figure 11**

**Figure 12**

Tilt    **Figure 13**

Figure 14

**Figure 15**

**Figure 16**

Figure 17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2454928 A
- EP 1707042 A
- EP 0472855 A
- EP 2200420 A
- EP 2868183 A